Europäisches Patentamt

European Patent Office

Office européen des brevets

(11) Veröffentlichungsnummer: **0 288 696 B1**

## (12) EUROPÄISCHE PATENTSCHRIFT

(45) Veröffentlichungstag der Patentschrift: **05.08.92**

(21) Anmeldenummer: **88103593.5**

(22) Anmeldetag: **08.03.88**

(51) Int. Cl.⁵: **C04B 41/87**, B23B 27/14, C04B 35/58

(54) **Sinterformkörper.**

(30) Priorität: **29.04.87 DE 3714240**

(43) Veröffentlichungstag der Anmeldung:
**02.11.88 Patentblatt 88/44**

(45) Bekanntmachung des Hinweises auf die
Patenterteilung:
**05.08.92 Patentblatt 92/32**

(84) Benannte Vertragsstaaten:
**DE ES FR GB IT NL SE**

(56) Entgegenhaltungen:
EP-A- 0 069 706
EP-A- 0 095 131
EP-A- 0 113 660
EP-A- 0 195 205
EP-A- 0 232 711

**WORLD PATENTS INDEX LATEST DATA BANK, accession no. 82-87266E, Derwent Publications Ltd., London, GB; & JP - A - 57 145 088 (HITACHI METAL KK) 07-09-1982**

(73) Patentinhaber: **Stora Feldmühle Aktiengesellschaft**
**Feldmühleplatz 1**
**W-4000 Düsseldorf 11(DE)**

(72) Erfinder: **Dworak, Ulf, Dr. Dipl.-Min.**
**Pfarrstrasse 50**
**W-7066 Baltmannsweiler 2(DE)**
Erfinder: **Friederich, Kilian, Dr. Dipl.-Ing.**
**Hohenstaufenstrasse 20**
**W-7310 Plochingen(DE)**

**Beschreibung**

Die vorliegende Erfindung betrifft einen Sinterformkörper gemäß dem Gattungsbegriff des Patentanspruches 1 sowie ein Verfahren zur Herstellung eines solchen Sinterformkörpers.

Die US-A- 45 78 087 betrifft einen Sinterformkörper in Form einer Schneidplatte, der aus einem Substrat auf Basis Siliciumnitrid mit Anteilen von Titannitrid und einem Sinterhilfsmittel besteht, das mindestens eines der Oxide von Yttrium und Dysprosium umfaßt und außerdem noch Aluminiumoxid oder eine Mischung von Aluminiumoxid und Aluminiumnitrid enthält. Der bekannte Sinterformkörper weist eine Nutzschicht aus Aluminiumoxid auf, die durch die bekannten Verfahren der PVD- oder CVD-Beschichtung aufgebracht ist. Außer der Nutzschicht kann auch noch eine Zwischenschicht vorgesehen sein, die aus Aluminiumnitrid oder Aluminiumoxidnitrid, aus Titancarbid oder Titannitrid bestehen kann. Die Nutzschicht soll eine Dicke von 0,3 bis max. 5 $\mu$m aufweisen.

Die US-A- 44 16 670 betrifft ebenfalls eine mehrschichtige Schneidplatte, wobei das Substrat aus Siliciumnitrid, das zusätzlich noch Carbide, Nitride und Carbonitride von Titan, Vanadium, Chrom, Zirkonium, Niob, Molybdän, Hafnium, Tantal und Wolfram bzw. deren Mischungen enthält. Als Nutzschicht dieser bekannten Schneidplatte werden die Carbide von Titan, Vanadium, Chrom, Zirkonium, Niob, Molybdän, Hafnium, Tantal und Wolfram vorgeschlagen. Aufgebracht wird die Nutzschicht in einer Dicke von 0,1 bis 10 $\mu$m durch das CVD- oder PVD-Verfahren.

Gemäß einem noch sehr jungen Vorschlag hat die Anmelderin auch bereits vorgeschlagen, bei Schneidwerkzeugen mit einem Schichtaufbau, bei denen das Substrat aus z.B. Siliciumnitrid besteht, eine Zwischenschicht aus Siliciumdioxid zur Verbesserung der Haftfestigkeit mit Nutzschichten aus Aluminiumoxid, Zirkoniumoxid, Hafniumoxid, deren Mischung oder aus Titancarbonitrid vorzusehen.

Aus der DE-C- 35 09 572 ist ein nach dem CVD- oder PVD-Verfahren beschichtetes Gleitelement bekannt, bei dem als Werkstoff für den Grünkörper neben einer Vielzahl von anderen Werkstoffen auch Siliciumnitrid genannt ist. Die Beschichtung kann ggf. aus Aluminiumnitrid bestehen. Die vorgeschlagenen Schichten haben eine Dicke von 0,2 bis 10 $\mu$m und haben sich als Nutzschichten bei Gleitelementen hervorragend bewährt, sind aber noch nicht für alle Anwendungsbereiche geeignet, insbesondere nicht, wenn eine weitere verbesserte Verschleißbeständigkeit und gute chemische Resistenz gegenüber Stahl verlangt wird.

Allen diesen Vorschlägen haften noch gewisse Nachteile an, wozu insbesondere die chemische Resistenz bei der spanabhebenden Bearbeitung von Stahl und die Thermoschockbeständigkeit zu zählen sind, so daß die an sich herausragenden Eigenschaften des zur Herstellung der Grundkörper verwendeten Siliciumnitrids, wie z.B. die Bruchzähigkeit und Hochtemperaturfestigkeit nicht optimal ausgenutzt werden.

Die vorliegende Erfindung sieht ihre Aufgabe in der Entwicklung eines Sinterformkörpers mit verbesserten Eigenschaften, der insbesondere über eine gute Thermoschockbeständigkeit, hohe Verschleißfestigkeit und Härte verfügen soll. Der Sinterformkörper soll auch dort einsetzbar sein, wo gute chemische Resistenz gegenüber Stahl verlangt wird.

Zur Lösung dieser Aufgabe sieht die Erfindung bei einem Sinterwerkstoff gemäß dem Gattungsbegriff des Patentanspruches 1 dessen kennzeichnende Merkmale vor.

Die hervorragende Eignung des Sinterformkörpers erklärt sich zum einen durch die hohe Wärmeleitfähigkeit der Nutzschicht, die maßgeblich durch die hohe Wärmeleitfähigkeit des dort enthaltenen Aluminiumnitrids von ca. 170 W/m.K - gemessen bei Raumtemperatur - beeinflußt wird. Zum anderen unterscheiden sich die thermischen Längenausdehnungskoeffizienten zwischen der Nutzschicht und dem Grundkörper nur geringfügig, denn einem Wert von Aluminiumnitrid von 5,4 x $10^{-6}$/K steht für gesintertes bzw. heißgepreßtes Siliciumnitrid ein Wert von 3,3 bzw. 3,2 x $10^{-6}$/K - im Temperaturbereich von Raumtemperatur bis ca. 1000 °C - gegenüber. Diese weitestgehende Übereinstimmung sichert die hohe Thermoschockbeständigkeit des Sinterformkörpers und trägt dazu bei, daß ein Abplatzen der Nutzschicht vom Grundkörper bei hoher thermischer Beanspruchung nicht eintritt, wie das vielfach dann beobachtet wird, wenn große Unterschiede zwischen den Werkstoffen des Substrates und der Beschichtung vorliegen. Ein anderer wesentlicher Vorteil des Sinterformkörpers besteht in der relativ hohen Dicke der Nutzschicht. Die aus dem Stand der Technik bekannten und durch CVD- bzw. PVD-Verfahren hergestellten Nutzschichten sind mit ihrer Dicke von max. 10 $\mu$m 10 bis 100 mal dünner als die Nutzschichten des erfindungsgemäßen Sinterformkörpers und weisen infolgedessen eine wesentlich geringere Verschleißfestigkeit auf.

Eine weitere Verbesserung wird durch die Zugabe von Siliciumcarbidfasern erzielt, wobei unter diesen SiC-Fasern auch die polykristallinen Fasern, bevorzugt aber die sogenannten Whisker, also einkristalline Fasern zu verstehen sind. Auch hier ist die relativ hohe Dicke der Nutzschicht von Vorteil, durch die es erst ermöglicht wird, die SiC-Fasern einzusetzen, die vorzugsweise eine Länge von 5 bis 20 $\mu$m und einen Durchmesser von 0,4 bis 1,2 $\mu$m aufweisen. Der durch die Mitverwendung von SiC-Fasern entstehende Vorteil ist darin zu sehen, daß diese Fasern im Vergleich zu Aluminiumnitrid einen größeren thermischen Ausdehnungskoeffizienten aufweisen, so daß beim Abkühlen von der Sintertemperatur in der Nutzschicht Druckspannungen in der als Aluminiumnitrid-Matrix zu verstehenden Nutzschicht erzeugt werden.

Eine wesentliche Bedeutung kommt auch einem sehr niedrigen Verunreinigungsgrad der Nutzschicht zu, so daß es sich als sehr vorteilhaft erwiesen hat, von hochreinen Ausgangspulvern auszugehen. Der maximale Verunreinigungsgehalt, wie er insgesamt durch die in den verschiedenen Ausgangspulvern enthaltenen Verunreinigungen und durch den Mahlabrieb in zum Teil unvermeidbarer Weise entsteht, sollte auf jeden Fall < 5 Vol.%, vorzugsweise < 3 Vol.%, ganz bevorzugt < 0,5 Vol.% betragen, so daß sich die einzelnen Komponenten der Nutzschicht auf mindestens 95 Vol.%, vorzugsweise mindestens 97 Vol.%, ganz bevorzugt mehr als 99,5 Vol.% ergänzen, wobei der Rest in Verunreinigungen besteht.

Die in der Nutzschicht enthaltenen Hartstoffe bewirken eine hohe Härte, die gemessen nach Vickers - HV 0,5 -bei größer 1500 liegt. Die Teilchengröße der Hartstoffe liegt vorzugsweise im Bereich von 1,5 bis 3,5 $\mu$m, die des Aluminiumnitrids bei 0,8 bis 5 $\mu$m.

Siliciumnitrid als Werkstoff zur Herstellung des Grundkörpers ist an sich bekannt. Im Rahmen der vorliegenden Erfindung haben sich als besonders geeignet Zusammensetzungen erwiesen, die neben Siliciumnitrid noch Zusätze von Sinterhilfsmitteln, wie Yttriumoxid, Magnesiumoxid und Aluminiumoxid oder Seltene Erdoxide enthalten, so daß dem Grundkörper eine zweiphasige Struktur zugeschrieben werden kann, die einmal aus Siliciumnitrid und zum anderen aus einer intergranularen silikatischen Phase - amorph oder kristallin - besteht und die Bestandteile Sauerstoff, Stickstoff, Silicium, Yttrium, Aluminium und Magnesium aufweist.

Zur Herstellung ggf. erforderlicher Hilfsschichten, die zwischen dem Grundkörper und der Nutzschicht angeordnet werden können, haben sich Siliciumdioxid und Siliciumaluminiumoxinitrid (Sialon) als geeignet erwiesen.

Weitere bevorzugte Ausführungsformen ergeben sich aus den Unteransprüchen.

Dabei ist insbesondere die Ausbildung des Sinterformkörpers in Form einer Schneidplatte bevorzugt, denn es hat sich gezeigt, daß eine im Millimeterbereich liegend ausgebildete Nutzschicht an den Funktionsflächen (Spanflächen) zu einer hohe chemische Resistenz und Thermoschockbeständigkeit aufweisende Schneidplatte führt, die infolge des im wesentlichen aus Siliciumnitrid ausgebildeten Grundkörpers außerdem eine hohe Bruchzähigkeit und hohe Hochtemperaturfestigkeit aufweist. Insbesondere ist eine solche Schneidplatte für kurze Eingriffszeiten, unterbrochene Schnitte und Drehoperationen mit ungleicher Schnitt-Tiefe geeignet. Bei einer solchen Schneidplatte sind die Freiflächen nicht beschichtet. Als besonders geeignet haben sich bei Schneidplatten Nutzschichten erwiesen, die Siliciumcarbidfasern in einer Menge von 5 bis 20 Vol.%, vorzugsweise mehr als 10 Vol.% zusammen mit metalloxidischen Verbindungen in einer Menge von mindestens 3 Vol.%. enthalten.

Als ganz besonders geeignet haben sich bei als Schneidplatten entsprechend der Erfindung ausgebildeten Sinterformkörpern Dicken von 4,8 bis 8 mm erwiesen.

Ein weiteres wesentliches Einsatzgebiet des erfindungsgemäßen Sinterformkörpers betrifft das Gebiet der keramischen Dichtscheiben, wie sie in den bekannten Einhebelmischern eingesetzt werden. Dabei kann auch auf die Zufügung von Siliciumcarbidfasern verzichtet werden, da es hier weniger auf eine hohe Zähigkeit, sondern insbesondere auf hohe Thermoschockbeständigkeit und Verschleißfestigkeit ankommt. Andere Einsatzgebiete des Sinterformkörpers sind Gleitelemente wie z.B. Gleitringe.

Von wesentlicher Bedeutung ist auch das Herstellungsverfahren des Sinterformkörpers, das sich durch wenige Verfahrensschritte und daher durch eine hohe Wirtschaftlichkeit auszeichnet.

Entsprechend dem beanspruchten Heißpressverfahren, bei dem eine Aufeinanderschichtung der einzelnen Pulverschichten, also z.B. einer Lage für eine Nutzschicht, der Lage für den Grundkörper und einer weiteren Lage der Nutzschicht erfolgt, wird vorzugsweise eine Graphitform verwendet und diese nach Befüllung mit den verschiedenen Pulverschichtungen dem Heißpressvorgang unterzogen. Ein Pressen nach Einfüllung der einzelnen Pulverschichtungen wird dagegen nicht vorgenommen. Die Durchführung dieses Verfahrens bewirkt eine weitaus festere Verbindung der einzelnen Schichten miteinander, als dies bei den bekannten CVD- bzw. PVD-Verfahren der Fall ist. Vermutlich ist der gute Verbund der einzelnen Schichten darauf zurückzuführen, daß an den Grenzen der Pulverschicht eine durch das Heißpressverfahren initiierte Diffusion stattfindet, wobei die gute Bindung der einzelnen Schichten aneinander möglicherweise auch dadurch unterstützt wird, daß an der Grenze der Pulverschichten ein gewisser Übergang der einzelnen Pulver ineinander stattfindet, so daß hier nicht eine so scharf verlaufenden Grenze zwischen Substrat und Beschichtung ausgebildet wird, wie es bei den bekannten Beschichtungsverfahren der Fall ist.

Eine weitere Möglichkeit zur Herstellung des Sinterformkörpers besteht darin, daß zunächst ein Grundkörper aus einer Pulvermischung auf Basis Siliciumnitrid geformt wird und dieser Grünkörper in eine Form eingesetzt wird, in der bereits eine zur Herstellung einer Nutzschicht vorgesehene Pulverschichtung enthalten ist. Eine weitere Nutzschicht kann durch Eintrag einer Pulverschichtung auf dem Grünkörper vorgenommen werden und dann die Form - enthaltend die beiden Pulverschichtungen und den Grünkörper - heißgepreßt werden.

Eine weitere bevorzugte Verfahrensvariante besteht darin, daß zunächst Folien zur Ausbildung des Grundkörpers und der Nutzschichten - ggf. auch von Zwischenschichten - hergestellt werden, wobei die Folien einen hohen Anteil von organischem Bindemittel enthalten und diese Folien schichtweise übereinandergelegt werden, so daß beispielsweise eine Grundkörperfolie beidseitig mit einer zur Herstellung der Nutzschicht vorgesehenen Folie abgedeckt ist, worauf der Schichtaufbau durch Warmpressen bei 50 bis 120 °C miteinander verklebt wird und durch Schneiden oder Stanzen aus dem Schichtverbund ein Rohling hergestellt wird, der nach Abdampfung der organischen Bestandteile in einem weiteren Verfahrensschritt drucklos in Stickstoffatmosphäre gesintert wird.

Die nachfolgenden Beispiele dienen der näheren Erklärung der Erfindung.

Beispiel 1:

In einer Graphitform zur Ausbildung einer Schneidplatte werden die nachfolgend beschriebenen Pulverschichten in der Reihenfolge A/B/A eingefüllt:

| A (Nutzschicht) | |
|---|---|
| 74 Gew.% | AlN |
| 11 " | TiC |
| 13 " | $TiB_2$ |
| 2 " | $Al_2O_3$ |
| Dicke der Pulverschicht A in der Graphitform: 2 mm | |

| B (Grundkörper) | |
|---|---|
| 91 Gew.% | $Si_3N_4$ |
| 9 " | $Y_2O_3$ |
| Dicke der Pulverschicht B in der Graphitform: 10 mm | |

Nach dem Befüllen der Graphitform wird bei 1730 °C, und einer Verweilzeit von 1 h bei einem Preßdruck von 31,4 MPa in Stickstoffatmosphäre heißgepreßt. Der Schneidplattenrohling weist nach dem Heißpreßvorgang eine Dicke von 6 mm auf. Nach dem Schleifvorgang wird eine Dicke der beiden Nutzschichten von 0,5 mm gemessen.

Beispiel 2:

Entsprechend Beispiel 1 wurde eine weitere Schneidplatte hergestellt, wobei die zur Herstellung der Nutzschichten dienende Pulverzusammensetzung A sich jedoch wie folgt zusammensetzt:

| | |
|---|---|
| 62 Gew.% | AlN |
| 11 " | TiC |
| 13 " | $TiB_2$ |
| 12 " | SiC-Fasern |
| 2 " | $Al_2O_3$ |

Beispiel 3:

Zur Herstellung von Keramikfolien werden zwei Pulvermischungen mit den nachfolgend beschriebenen anorganischen Komponenten hergestellt:

| A (Nutzschicht) | |
|---|---|
| 61 Gew.% | AlN |
| 33 " | TiC |
| 6 " | $Y_2O_3$ |

| B (Grundkörper) | |
|---|---|
| 91 Gew.% | $Si_3N_4$ |
| 8 " | $Y_2O_3$ |
| 1 " | $Al_2O_3$ |

Den beiden Keramikpulvermischungen wird eine 40 %ige Lösung von Polyäthylenglykol und Polyvinylbutyral als Bindemittel in Äthylalkohol und Trichloräthylen als Lösungsmittel zugesetzt, wobei die Lösung noch Plastifizierungsmittel, Verflüssigungsmittel und Benetzungshilfen enthält.

Aus den beiden Massen werden Folien in einer Dicke von jeweils 0,5 mm hergestellt. Diese Folien werden wie folgt übereinandergeschichtet:

zwei Lagen B,

neun Lagen A,

zwei Lagen B

und bei ca. 60 °C durch geringen Druck miteinander verklebt. Aus dem Schichtverbund werden Rohlinge herausgeschnitten und die organischen Bestandteile bei Temperaturen bis 350 °C in Stickstoffatmosphäre ausgetrieben. Anschließend wird ebenfalls bei Stickstoffatmosphäre und einer Temperatur von 1740 °C während einer Haltezeit von 60 min gesintert. Die gesinterten Rohlinge werden zur Ausbildung von Schneidplatten Planparallel geschliffen.

Beispiel 4:

Entsprechend der in Beispiel 3 beschriebenen Verfahrensweise werden Schneidplatten hergestellt, wobei die Nutzschicht A jedoch hinsichtlich der anorganischen Komponenten folgende Zusammensetzung aufweist:

| A (Nutzschicht) | |
|---|---|
| 61 Gew.% | AlN |
| 20 " | TiC |
| 7 " | $Y_2O_3$ |
| 3 " | $Al_2O_3$ |
| 9 " | SiC-Whisker. |

## Patentansprüche

**1.** Sinterformkörper aus keramischem Werkstoff mit schichtförmigem Aufbau, aufweisend einen Grundkörper, der im wesentlichen aus metalloxidische Sinterhilfsmittel enthaltendem Siliciumnitrid besteht, ggf. eine oder mehrere auf den Grundkörper aufgetragene Zwischenschichten aufweist und eine äußere keramische Nutzschicht auf der Basis von Aluminiumnitrid besitzt, gekennzeichnet durch die Kombination nachfolgender Merkmale:

1. Die Nutzschicht enthält:

a) mindestens 60 Vol.% Aluminiumnitrid,

b) 7 bis 29 Vol.% Hartstoffe, bestehend aus: Titancarbid, Titannitrid, Titandiborid, Wolframcarbid, Niobcarbid, Niobborid oder einer Mischung dieser Substanzen,

c) 1 bis 15 Vol.% metalloxidische Verbindungen

d) 0 bis 25 Vol.% Siliciumcarbidfasern;

2. eine Dicke der Nutzschicht von 0,1 bis 1 mm.

**2.** Sinterformkörper nach Anspruch 1, gekennzeichnet durch eine Dicke der Nutzschicht von 0,2 bis 0,5 mm.

**3.** Sinterformkörper nach einem der Ansprüche 1 bis 2, dadurch gekennzeichnet, daß die Hartstoffe in einer Menge von 7 bis 20 Vol.% vorliegen.

**4.** Sinterformkörper nach einem der Ansprüche 1 bis 3, dadurch gekennzeichnet, daß die metalloxidischen Verbindungen in einer Menge von 2 bis 8 Vol.% vorliegen.

**5.** Sinterformkörper nach einem der Ansprüche 1 bis 4, dadurch gekennzeichnet, daß die metalloxidischen Verbindungen Yttriumoxid, Aluminiumoxid oder Kalziumoxid oder eine Mischung von zwei oder mehreren dieser Substanzen sind.

**6.** Sinterförmkörper nach einem der Ansprüche 1 bis 5, dadurch gekennzeichnet, daß die Nutzschicht 5 bis 20 Vol.% Siliciumcarbidfasern enthält.

**7.** Sinterformkörper nach einem der Ansprüche 1 bis 6, dadurch gekennzeichnet, daß die Nutzschicht als Hartstoffe 15 bis 20 Vol.% Titancarbid oder Titannitrid enthält.

**8.** Sinterformkörper nach einem der Ansprüche 1 bis 6, dadurch gekennzeichnet, daß die Nutzschicht als Hartstoffe 15 bis 20 Vol.% einer aus Titancarbid und Titandiborid bestehenden Mischung enthält.

**9.** Sinterformkörper nach einem der Ansprüche 1 bis 6, dadurch gekennzeichnet, daß die Nutzschicht als Hartstoffe 15 bis 20 Vol.% einer Mischung aus Titannitrid und Titandiborid enthält.

**10.** Sinterformkörper nach einem der Ansprüche 1 bis 9, dadurch gekennzeichnet, daß die Nutzschicht auf einer Zwischenschicht aus Siliciumoxid oder einem Siliciumaluminiumoxinitridwerkstoff (Sialon) angeordnet ist.

**11.** Sinterformkörper nach einem der Ansprüche 1 bis 10, gekennzeichnet durch eine Anordnung der Nutzschicht auf mindestens zwei sich einander gegenüberliegenden Seiten des Grundkörpers.

**12.** Sinterformkörper nach einem der Ansprüche 1 bis 11, dadurch gekennzeichnet, daß der Sinterformkörper als Schneidplatte für die spanabhebende Bearbeitung ausgebildet ist.

**13.** Sinterformkörper nach einem der Ansprüche 1 bis 12, dadurch gekennzeichnet, daß der als Schneidplatte ausgebildete Sinterformkörper lediglich an seinen Funktionsflächen mit der Nutzschicht versehen ist.

**14.** Sinterformkörper nach einem der Ansprüche 1 bis 13, dadurch gekennzeichnet, daß der als Schneidplatte ausgebildete Sinterformkörper eine Dicke von 3,0 bis 10 mm aufweist.

**15.** Sinterformkörper nach einem der Ansprüche 1 bis 14, dadurch gekennzeichnet, daß der Gehalt an Verunreinigung in der Nutzschicht bei < 5 Vol.% liegt.

**16.** Verfahren zur Herstellung des Sinterformkörpers nach einem der Ansprüche 1 bis 15, dadurch gekennzeichnet, daß die Pulver zur Herstellung des Grundkörpers und der Nutzschicht(en) schichtweise in eine zur Herstellung des Sinterformkörpers vorgesehene Form eingefüllt werden und der Sinterformkörper in Schutzgasatmosphäre durch Heißpressen hergestellt wird.

**17.** Verfahren zur Herstellung des Sinterformkörpers nach einem der Ansprüche 1 bis 15, dadurch gekennzeichnet, daß zur Herstellung des Sinterformkörpers in einem ersten Verfahrensschritt Folien zur Ausbildung des Grundkörpers und der Nutzschicht(en) mit einem hohen Anteil an organischem Bindemittel hergestellt werden, aus diesen Folien ein Rohling gebildet wird, in dem diese Folien übereinander gestapelt und durch warmes Pressen miteinander verklebt werden, der Rohling aus dem entstandenen Schichtverbund gestanzt oder geschnitten wird und der Rohling zur Ausbildung des Sinterformkörpers drucklos in Stickstoffatmosphäre gesintert wird.

**Claims**

1. Sintered moulded article consisting of ceramic material and having a layered structure, comprising a basic body that consists substantially of silicon nitride containing metal oxide sintering auxiliaries, optionally one or more intermediate layers applied to the basic body, and an outer ceramic utility layer based on aluminium nitride, characterised by the combination of the following features:
   1. the utility layer comprises:
      a) at least 60 % by volume aluminium nitride,
      b) from 7 to 29 % by volume mechanically resistant materials consisting of: titanium carbide, titanium nitride, titanium diboride, tungsten carbide, niobium carbide, niobium boride or a mixture of those substances,
      c) from 1 to 15 % by volume metal oxide compounds,
      d) from 0 to 25 % by volume silicon carbide fibres;
   2. a thickness of the utility layer of from 0.1 to 1 mm.

2. Sintered moulded article according to claim 1, characterised by a thickness of the utility layer of from 0.2 to 0.5 mm.

3. Sintered moulded article according to claim 1 or claim 2, characterised in that the mechanically resistant materials are present in an amount of from 7 to 20 % by volume.

4. Sintered moulded article according to any one of claims 1 to 3, characterised in that the metal oxide compounds are present in an amount of from 2 to 8 % by volume.

5. Sintered moulded article according to any one of claims 1 to 4, characterised in that the metal oxide compounds are yttrium oxide, aluminium oxide or calcium oxide or a mixture of two or more of those substances.

6. Sintered moulded article according to any one of claims 1 to 5, characterised in that the utility layer comprises from 5 to 20 % by volume silicon carbide fibres.

7. Sintered moulded article according to any one of claims 1 to 6, characterised in that the utility layer comprises, as mechanically resistant materials, from 15 to 20 % by volume titanium carbide or titanium nitride.

8. Sintered moulded article according to any one of claims 1 to 6, characterised in that the utility layer comprises, as mechanically resistant materials, from 15 to 20 % by volume of a mixture consisting of titanium carbide and titanium diboride.

9. Sintered moulded article according to any one of claims 1 to 6, characterised in that the utility layer comprises, as mechanically resistant materials, from 15 to 20 % by volume of a mixture of titanium nitride and titanium diboride.

10. Sintered moulded article according to any one of claims 1 to 9, characterised in that the utility layer is arranged on an intermediate layer consisting of silicon oxide or a silicon aluminium oxynitride material (Sialon).

11. Sintered moulded article according to any one of claims 1 to 10, characterised by an arrangement of the utility layer on at least two mutually opposing sides of the basic body.

12. Sintered moulded article according to any one of claims 1 to 11, characterised in that the sintered moulded article is constructed as a cutting plate for machining purposes.

13. Sintered moulded article according to any one of claims 1 to 12, characterised in that the sintered moulded article constructed as a cutting plate is provided with the utility layer on its functional surfaces only.

14. Sintered moulded article according to any one of claims 1 to 13, characterised in that the sintered moulded article constructed as a cutting plate has a thickness of from 3.0 to 10 mm.

15. Sintered moulded article according to any one of claims 1 to 14, characterised in that the impurity content of the utility layer is < 5 % by volume.

16. Process for the production of the sintered moulded article according to any one of claims 1 to 15, characterised in that the powders for producing the basic body and the utility layer(s) are introduced in layers into a mould provided for producing the sintered moulded article, and the sintered moulded article is produced by hot-pressing in a protective gas atmosphere.

17. Process for the production of the sintered moulded article according to any one of claims 1 to 15, characterised in that, in order to produce the sintered moulded article, films having a high proportion of organic binder are produced for forming the basic body and the utility layer(s) in a first process step, a blank is formed from those films by stacking those films one on top of another and bonding them to one another by hot-pressing, the blank is stamped or cut from the resulting laminate and the blank is subjected to pressureless sintering in a nitrogen atmosphere to form the sintered moulded article.

**Revendications**

1. Corps fritté en matériau céramique à structure stratiforme, présentant un corps de base qui est formé d'adjuvants de frittage en oxydes métalliques contenant du nitrure de silicium, qui présente le cas échéant une ou plusieurs couches intermédiaires appliquées sur le corps de base et qui comporte une couche d'usure extérieure en céramique à base de nitrure d'aluminium, caractérisé par la combinaison des caractéristiques suivantes:
   1. La couche d'usure contient:
      a) au moins 60 % en volume de nitrure d'aluminium
      b) 7 à 29 % en volume de substances dures composées de:
      carbure de titane, nitrure de titane, borure de titane, carbure de tungstène, carbure de niobium, borure de niobium ou d'un mélange de ces substances,
      c) 1 à 15 % en volume de composés d'oxydes métalliques
      d) 0 à 25 % en volume de fibres de carbure de silicium;
   2. une épaisseur de la couche d'usure de 0,1 à 1 mm.

2. Corps fritté selon la revendication 1, caractérisé par une épaisseur de la couche d'usure de 0,2 à 0,5 mm.

3. Corps fritté selon l'une des revendications 1 à 2, caractérisé en ce que les substances dures représentent de 7 à 20 % du volume.

4. Corps fritté selon l'une des revendications 1 à 3, caractérisé en ce que les composés d'oxydes métalliques représentent de 2 à 8 % du volume.

5. Corps fritté selon l'une des revendications 1 à 4, caractérisé en ce que les composés d'oxydes métalliques sont de l'oxyde d'yttrium, de l'oxyde d'aluminium ou de l'oxyde de calcium ou un mélange de ces deux ou plusieurs de substances.

6. Corps fritté selon l'une des revendications 1 à 5, caractérisé en ce que la couche d'usure contient 5 à 20 % en volume de fibres de carbure de silicium.

7. Corps fritté selon l'une des revendications 1 à 6, caractérisé en ce que la couche d'usure contient 15 à 20 % en volume de carbure de titane ou de nitrure de titane comme substance dure.

8. Corps fritté selon l'une des revendications 1 à 6, caractérisé en ce que la couche d'usure contient 15 à 20 % en volume d'un mélange composé de carbure de titane et de borure de titane comme substance dure.

9. Corps fritté selon l'une des revendications 1 à 6, caractérisé en ce que la couche d'usure contient 15 à 20 % en volume d'un mélange composé de nitrure de titane et de borure de titane comme substance dure.

10. Corps fritté selon l'une des revendications 1 à 9, caractérisé en ce que la couche d'usure est appliquée sur une couche intermédiaire en oxyde de silicium ou en un oxynitrure de silicium et d'aluminium (Sialon).

11. Corps fritté selon l'une des revendications 1 à 10, caractérisé par une disposition de la couche d'usure sur au moins deux faces mutuellement opposées du corps de base.

12. Corps fritté selon l'une des revendications 1 à 11, caractérisé en ce que le corps fritté est agencé en plaquette de coupe pour l'usinage par enlèvement de copeaux.

13. Corps fritté selon l'une des revendications 1 à 12, caractérisé en ce que le corps fritté agencé en plaquette de coupe est muni de la couche d'usure uniquement au niveau de ses surfaces fonctionnelles.

14. Corps fritté selon l'une des revendications 1 à 13, caractérisé en ce que le corps fritté agencé en plaquette de coupe a une épaisseur comprise entre 3,0 et 10 mm.

15. Corps fritté selon l'une des revendications 1 à 14, caractérisé en ce que la teneur en impuretés dans la couche d'usure est < 5 % du volume.

16. Procédé pour la fabrication du corps fritté selon l'une des revendications 1 à 15, caractérisé en ce qu'on verse en couches, dans un moule prévu pour la fabrication du corps fritté, la poudre pour la fabrication du corps de base et de la (des) couche(s) d'usure et on fabrique le corps fritté par pressage à chaud sous atmosphère inerte.

17. Procédé pour la fabrication du corps fritté selon l'une des revendications 1 à 15, caractérisé en ce que, pour la fabrication du corps fritté, on produit, au cours d'une première phase du procédé, des feuilles comportant une proportion élevée de liant organique pour la fabrication du corps de base et de la (des) couche(s) d'usure, on forme une ébauche à partir de ces feuilles en empilant les feuilles les unes sur les autres et en les collant entre elles par pressage à chaud, on découpe ou on estampe l'ébauche dans le composite stratifié ainsi obtenu et on fritte l'ébauche, sans pression, sous atmosphère inerte pour former le corps fritté.